# EUROPEAN PATENT SPECIFICATION

(11) **EP 1 370 431 B1**
(45) Date of publication and mention of the grant of the patent: **09.05.2007**
(21) Application number: 02702667.3
(22) Date of filing: 12.03.2002
(51) Int. Cl.: B60G 7/00

(54) **STRUCTURAL MEMBER FOR A SUSPENSION OF A MOTOR VEHICLE AND METHOD FOR ITS PRODUCTION**
STRUKTURELEMENT FÜR EINE FAHRZEUGRADAUFHÄNGUNG UND VERFAHREN ZU DEREN HERSTELLUNG
ELEMENT STRUCTURAL POUR SUSPENSION DE VEHICULE A MOTEUR ET PROCEDE DE PRODUCTION DE CELUI-CI

(30) Priority: 16.03.2001 IT TO20010253
(43) Date of publication of application: 17.12.2003
(73) Proprietor: Sistemi Sospensioni S.p.A., 20011 Corbetta MI (IT)
(72) Inventor: ALESSO, Guido, Sebastiano, I-12038 Savigliano (Cuneo) (IT); SPINA, Michele, I-10136 Torino (IT)
(74) Representative: Rondano, Davide
(86) International application number: PCT/IB2002/000756
(87) International publication number: WO 2002/074562

(56) References cited:
- EP-A- 0 726 102
- GB-A- 2 063 783
- JP-A- 6 143 953
- US-A- 3 131 576
- US-A- 5 362 090
- US-A- 5 931 485

## Description

The present invention relates to a structural member for a suspension of a motor vehicle, in particular for a triangular arm having a box-like structure, as specified in the preamble of claim 1, and further to a method for the production of such a member, as specified in the preamble of claim 8.

In the description and claims which follow, the term "triangular arm" is to be intended as referring to an arm provided with three points of connection defining a triangle.

Members having a box-like structure and adapted to be used as triangular swing arms in motor-vehicle suspensions are currently produced by arranging facing each other two separate portions, or half-shells, obtained in a conventional manner by means of pressing operations, and then proceeding with the fixing of such portions, for example by means of welding along at least a part of their perimeter. Members of this type are disclosed for instance in JP 06 143953 and US-A-5 362 090.

Moreover, GB-A-2 063 783 discloses a suspension member comprising a folded single sheet of metal and adapted to be coupled at its opposite ends to a wheel assembly and to a vehicle frame, respectively.

It is an aim of the present invention to provide a structural member having a box-like structure for a triangular arm of a motor-vehicle suspension, and a method for its production, which make it possible to remedy the typical drawbacks of the members with box-like structure currently produced and of the methods for their production, making available embodiments thereof which are structurally stronger and adapted to be produced less expensively and with a smaller amount of scrap.

These and other aims and advantages, which will become clearer from the following description, are achieved through a structural member for a triangular arm for a motor-vehicle suspension as defined in independent Claim 1 and a method for the production of a structural member for a triangular arm for a motor-vehicle suspension as defined in independent Claim 8.

The invention will be described in more detail hereinafter, purely by way of non-limiting example, with reference to the appended drawings, in which:
- Figure 1 is a perspective view of a structural member with box-like structure, according to a first preferred embodiment of the invention, used as a triangular arm of a motor-vehicle suspension;
- Figure 2 is a second perspective view of the structural member of Figure 1;
- Figure 3 shows the profile in plan view of the starting semi-finished product from which the structural member of Figures 1 and 2 is obtained;
- Figure 4 shows a front view of the semi-finished product of Figure 3, in section along a plane A-A, in which are indicated by means of dashed lines the successive folding stages necessary for the production according to the invention of the structural member of Figures 1 and 2,
- Figures 5A to 5D give some examples of combinations of the forms of the two portions constituting a structural member according to the invention;
- Figures 6A to 6E illustrate various possible types of embodiment of the joining edges of the two portions of a structural member according to the invention;
- Figures 7A and 7B show two examples of the mounting of an intermediate connection device, in particular of a bush with vertical axis, between the two portions of a structural member according to the invention;
- Figures 8A to 8D illustrate some examples of shapes which the cross-section of a structural member according to the invention can assume;
- Figure 9 is a perspective view of a further preferred embodiment of a structural member with box-like structure according to the invention;
- Figure 10 is a perspective view of a semi-finished product from which the structural member of Figure 9 is obtained by successive folding operations;
- Figure 11 is a perspective view which illustrates an example of use of the structural member of Figure 9 for both the left-hand and the right-hand triangular arms of a motor-vehicle suspension;
- Figure 12 is a perspective view of another preferred embodiment of a structural member with box-like structure according to the invention;
- Figures 13A to 13D are a plan view (Figure 13A) and three sectional views (Figures 13B-13D) in three different vertical planes of the structural member of Figure 12; and
- Figure 14 is a perspective view of a semi-finished product from which the structural member of Figure 12 is obtained by successive folding operations.

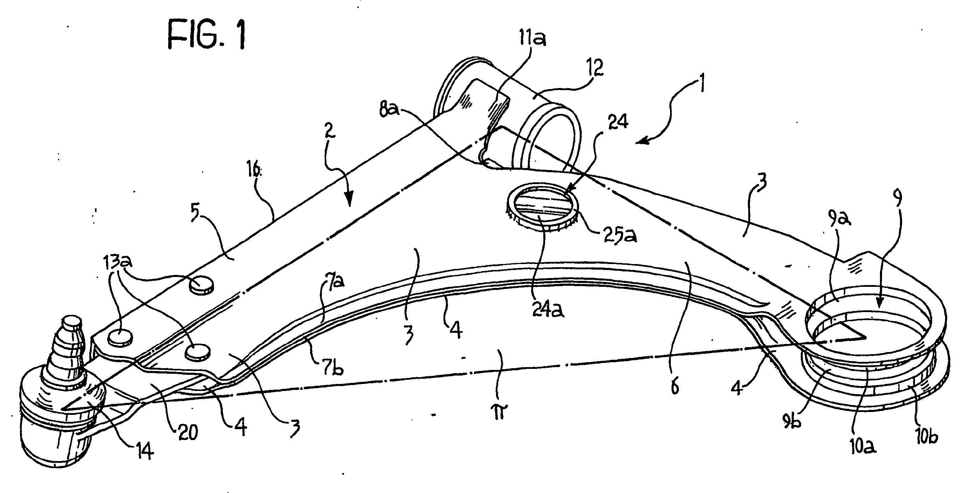

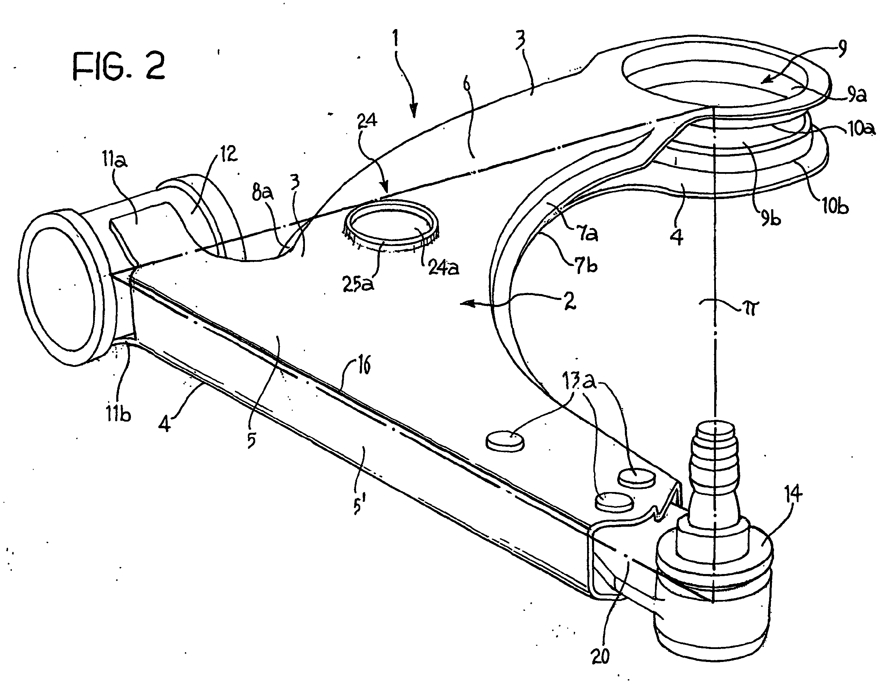

With reference to Figures 1 and 2, a triangular arm of a motor-vehicle suspension, generally indicated 1, comprises a structural member 2 with box-like structure, of substantially rectangular section, consisting of a first and a second portion 3 and 4 in the form of a respectively upper and lower half-shell. Said portions 3 and 4 are disposed facing each other with respect to a horizontal plane π, which is advantageously parallel to the planes in which they substantially i.e.

The structural member 2 of the suspension arm 1 comprises a straight limb 5, constituted in part by the aforesaid first portion 3 and in part by the second portion 4. The limb 5 has a substantially vertical lateral face 5' (visible in Figure 2), the upper edge 16 and lower edge 17 of which correspond to fold lines of the product. Connected to the limb 5, on the opposite side from the face 5', there is a second curved limb 6, also constituted in part by the upper portion 3 and in part by the lower portion 4 of the member 2.

The limbs 5 and 6 are of such dimensions and shape and are so arranged that their free ends are located at the vertices of a substantially right-angled triangle lying in a plane preferably coplanar with the plane n.

On the lateral face of the straight limb 5 that is connected to the curved limb 6, as on both the lateral faces of the latter, the two facing portions 3 and 4 of the structural member 2 have joining edges 7a, 7b, 8a and 8b (the latter not visible in Figures 1 and 2), where the numerals 7 and 8 refer to the lateral faces of the arm having in plan substantially a concave and convex profile, respectively, while the two letter indices a and b refer to the two portions, upper 3 and lower 4, respectively.

In the embodiment illustrated in Figures 1 and 2, said edges are of the superposed type: that is to say, they have the same shape, substantially flat and parallel to the plane in which lies the shaped element constituting the initial semi-finished product. Consequently, after the operations of folding over the two plate portions of the semi-finished product along the lines 16 and 17, which impart the definitive spatial arrangement to the two portions 3 and 4 of the structural member 2, the joining edges are facing one another and superposed with respect to the horizontal plane π, and can thus be rigidly connected to each other, preferably by means of seam welding.

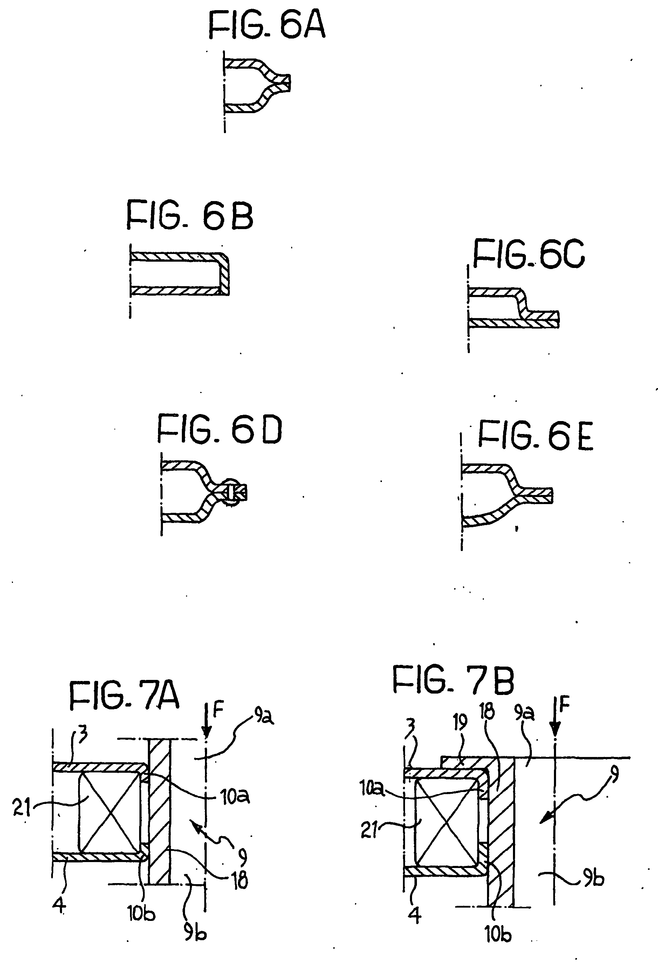

As illustrated in Figures 6A to 6E, as an alternative to a superposed form and arrangement, adapted to connection by means of seam welding (Figure 6A), any joining edges can assume various forms and arrangements, for example:
- butted form and arrangement for fixing by means of seam welding (Figure 6B);
- plat band form and arrangement for fixing by means of spot welding (Figure 6C);
- form and arrangement with superposed edges for fixing by means of rivetting (Figure 6D); or
- form and arrangement with superposed edges of suitable width for securing by adhesive or clinching (Figure 6E).

The fixing edges 7a, 7b, 8a and 8b (Figures 1 and 2) and before the free end of the curved limb 6, where a cylindrical seat 9 is provided to receive an intermediate connection device, such as a bush 18 with vertical axis (not shown). The seat 9 is obtained by the superposition of two circular holes 9a and 9b, produced respectively in the upper portion 3 and lower portion 4 of the structural member 2, so that they are coaxial with each other at the end of the operations of folding along the lines 16 and 17. In the region of the limb 6 surrounding the seat 9, the two portions 3 and 4 of the member 2 are therefore simply facing one another.

The holes 9a and 9b which form the seat 9 advantageously have respective circumferential edges 10a and 10b turned vertically towards the internal cavity of the structural member 2 and adapted to ensure centring and locking of the intermediate connection device (bush 18) between the two facing portions 3 and 4.

On the curved limb 6, in proximity to the area of connection to the straight limb 5, a further cylindrical seat 24 with vertical axis is formed, also adapted to the fixing of an intermediate connection device such as a bush. Said seat is obtained by superposing two circular holes 24a and 24b, produced respectively in the upper portion 3 and the lower portion 4 of the structural member, so that they are coaxial with each other at the end of the operations of folding along the lines 16 and 17. Like the holes 9a and 9b, the holes 24a and 24b also have respective circumferential edges 25a and 25b, in this case turned vertically towards the outside of the structural member 2, instead of towards the internal cavity, but having a similar function.

One of the two ends of the straight limb 5 has two appendages 11a and 11b, each associated with one of the two facing portions 3 and 4, being suitably shaped and opened out for stable retention of a bush 12 with horizontal axis, by engaging with the lateral cylindrical surface of the latter.

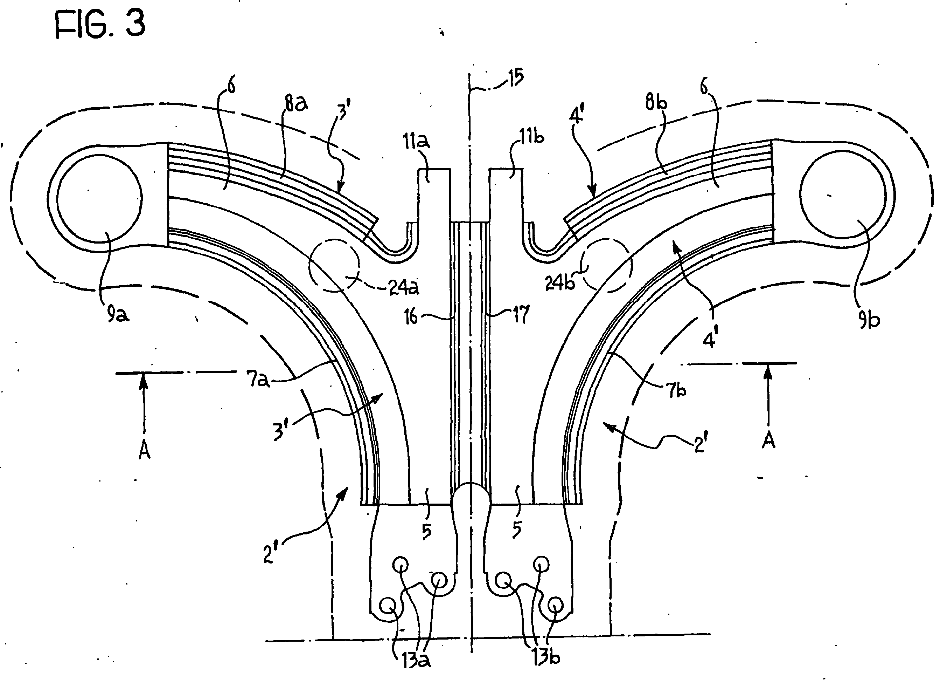

At the opposite end of the limb 5, three pairs of non-aligned apertures 13a and 13b (these latter not being visible in Figures 1 and 2, but only in Figure 3) are provided respectively in the two portions, upper 3 and lower 4, of the member 2, so as to be coaxial two by two after the folding operations. Each pair of apertures, preferably circular in shape, thus defines a cylindrical seat 13 into which is inserted a bolt for fixing a bracket member 20 carrying an articulation support 14. The locking of the bracket member 20, which extends for part of its length inside the internal cavity of the box-like structure at one end of the limb 5, can be effected in various other ways, for example by rivetting, as is well known to an expert in the field.

Figure 3 shows a plan view of the starting semi-finished product, consisting of a shaped element 2' with two plate portions 3' and 4', integrally produced therewith and corresponding respectively to the two portions 3 and 4 in the shape of a half-shell of the box-like member. The semi-finished product 2' is obtained by blanking from a sheet of steel, aluminium or plastics material (of the thermoplastic or thermosetting type, if necessary reinforced by the addition of glass, carbon or Kevlar fibres). The starting material in sheet form can have a constant or variable thickness (also termed multi-layer). In this second case the sheet is of a particular type, produced appropriately on the basis of the type of application, which has areas of different thickness according to the nature and distribution of the stresses to which the structural member is subject in operation.

In the exemplary embodiment described here, the starting semi-finished product has a shape symmetrical with respect to an axis 15, as can be clearly seen in Figure 3. Still with reference to said figure, it is also possible to identify for each of the two plate portions 3' and 4' the details of the finished product described above, that is to say, the two limbs, straight 5 and curved 6, the joining edges 7a, 7b, 8a and 8b, the circular holes 9a, 9b and 24a, 24b respectively defining the cylindrical seats with vertical axis 9 and 24, the shaped appendages 11a and 11b for retaining the bush 12 with horizontal axis, and the holes 13a and 13b for the engagement of the bracket member 20 carrying the articulation support 14.

A description will now be given of the method of production of the structural member 2 according to the present invention. The first operation consists in blanking the starting material in sheet form to obtain a semi-finished product 2' (Figure 3) suitably shaped so that its two integral plate portions 3' and 4' correspond to the development in plan view of the half-shell portions 3 and 4 of the structural member 2. At this point a first series of shaping and folding operations are carried out which essentially involve the joining edges 7a, 7b, 8a and 8b, the edges 10a, 10b and 25a, 25b of the circular holes 9a, 9b and respectively 24a, 24b, and the appendages 11a and 11b, to impart the final half-shell shape to the plate portions 3' and 4'.

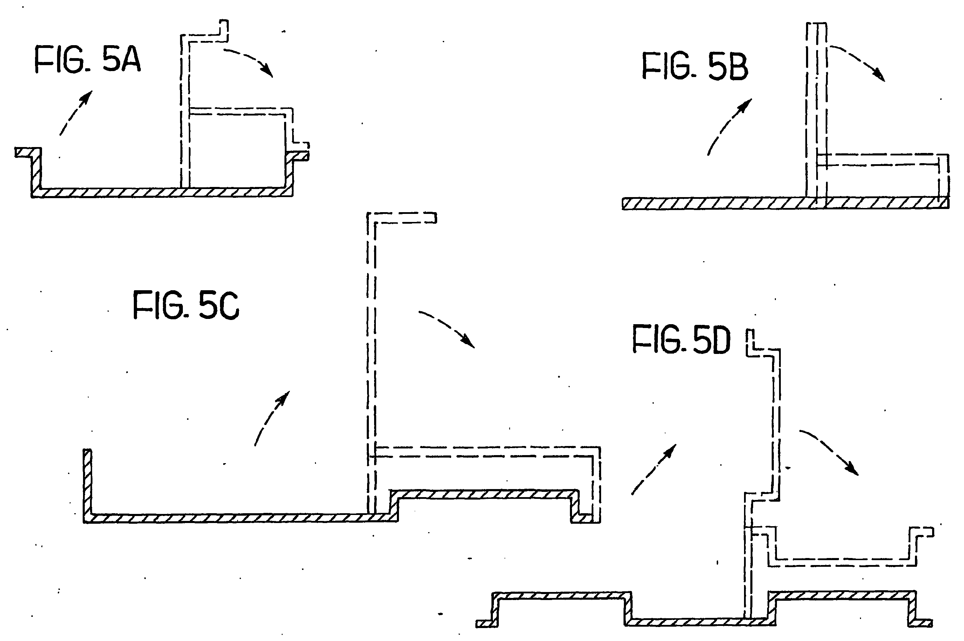

In the example described here, the two portions 3 and 4 of the structural member 2 are in the shape of concave half-shells, that is to say, the respective cross-sections in planes perpendicular to the axis of symmetry 15 have a substantially concave profile. It is possible, however, to arrange said portions so as to obtain different combinations of shape of the two half-shells, such as, for example, concave/flat, concave/convex and convex/convex (Figures 5B to 5D) .

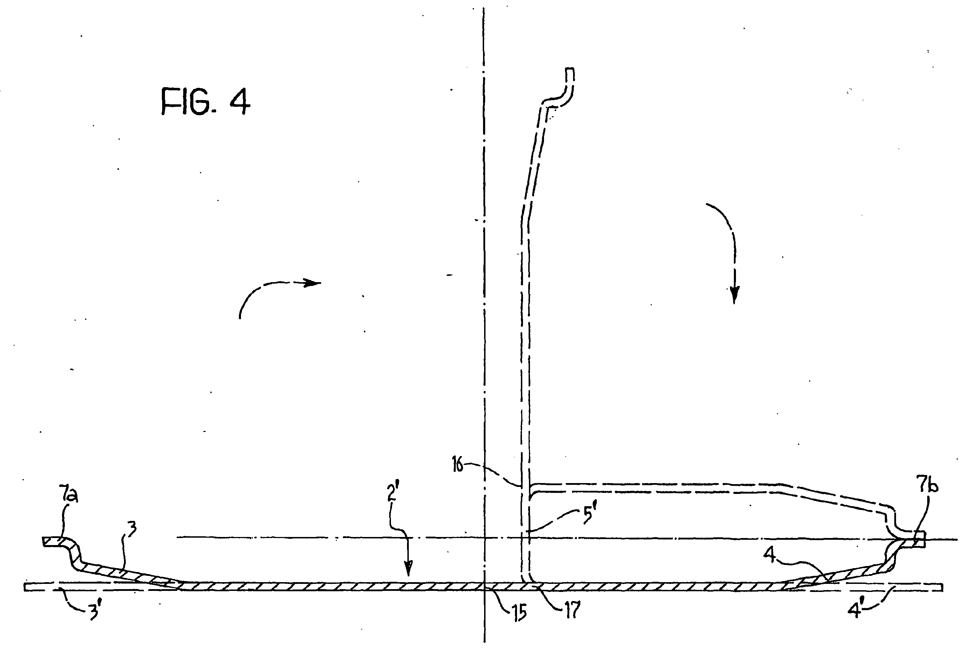

A successive step of the production method according to the invention consists in folding over the shaped element 2' of Figure 3 along at least one predetermined line, so as to dispose the respective portions 3 and 4 thereof substantially facing each other. With reference to Figure 4, in the exemplary embodiment under consideration the semi-finished product 2' is subjected in sequence to a first and a second folding operation at right-angles, respectively along the lines 17 and 16, parallel to each other and symmetrical with respect to the axis 15, so as to bring together the inner faces of the joining edges 7a, 7b, 8a and 8b.

As is known, each of the folding operations is carried out by using, for example, a core of prismatic shape (not shown) the length of which is equal at least to that of the folding line and the cross-section of which forms at least one angle equal to the desired folding angle. Folding is thus carried out at first by placing one of the folding faces of the core (that is to say, one of the faces of the core forming the desired folding angle) on the inner face of one of the two plate portions of the semi-finished product, so that the edge corresponding to the vertex of said angle is positioned at the folding line on the semi-finished product, and then rotating the other plate portion of the semi-finished product about the predetermined folding line until its inner face abuts the second of the aforesaid folding faces.

If intermediate connection devices are provided, such as bushes, a successive step of the production method provides for the insertion of said devices. Figures 7A and 7B illustrate two different solutions for the mounting of the bush 18 with vertical axis in the cylindrical seat 9. As described previously, the seat 9 is obtained by the superposition of the two circular holes 9a and 9b, formed in the plate portions 3' and 4' of the semi-finished product 2' in a position such that the holes are disposed coaxially with each other following the aforesaid folding operations. Moreover said holes are preferably provided with circumferential edges 10a and 10b folded over towards the inside of the member 2 perpendicularly to the plane in which the sheet lies.

With reference to Figure 7A, the bush 18 is inserted in the direction indicated by the arrow F into the seat 9, where it remains blocked by interference with the lateral surfaces of the edges 10a and 10b. To facilitate the insertion of the bush it is convenient to use a removable spacer 21 which holds the two facing portions 3 and 4 in position during said operation. Figure 7B illustrates a bush 18 with vertical axis, used as an intermediate connection device, provided with a flange 19 adapted to function as end stop for the insertion into the seat 9.

Similar considerations apply for the mounting of any further intermediate connection device, such as a bush, in the cylindrical seat 24 with vertical axis.

Where joining edges are provided, as in the preferred exemplary embodiment considered here, after folding, said edges are then fixed to each other, in a manner described previously with reference to Figures 6A to 6F (seam welding or spot welding, rivetting, securing by adhesive, or clinching).

It is likewise possible, according to particular requirements of structural strength or of the process, to complete the manufacture of the arm by the introduction of filling materials, such as structural foams, into the cavity within the box-like structure.

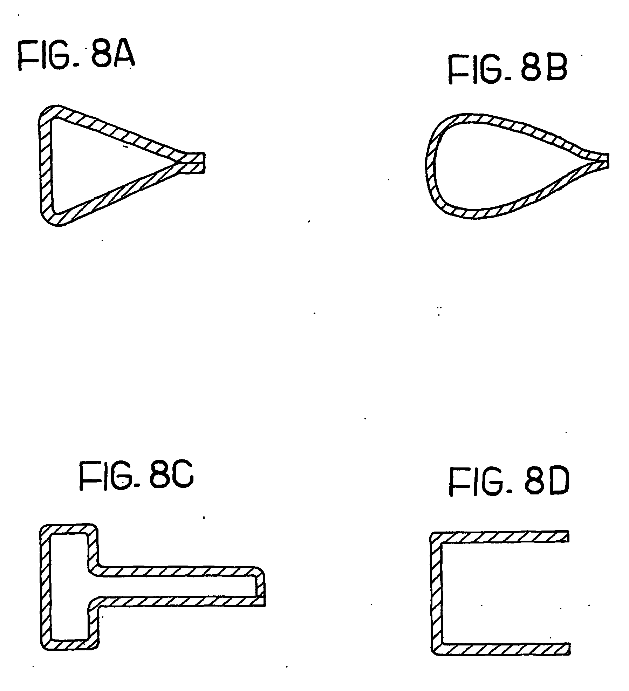

In the preferred embodiment described with reference to Figures 1 to. 4, the structural member 2 is substantially rectangular in cross-section. It is possible, however, to produce box-like structures with cross-sections of different shape, either closed, such as for example a triangular shape, teardrop-shape or recumbent T-shape (Figures 8A to 8C), or open, such as for example a C-shape (Figure 8D).

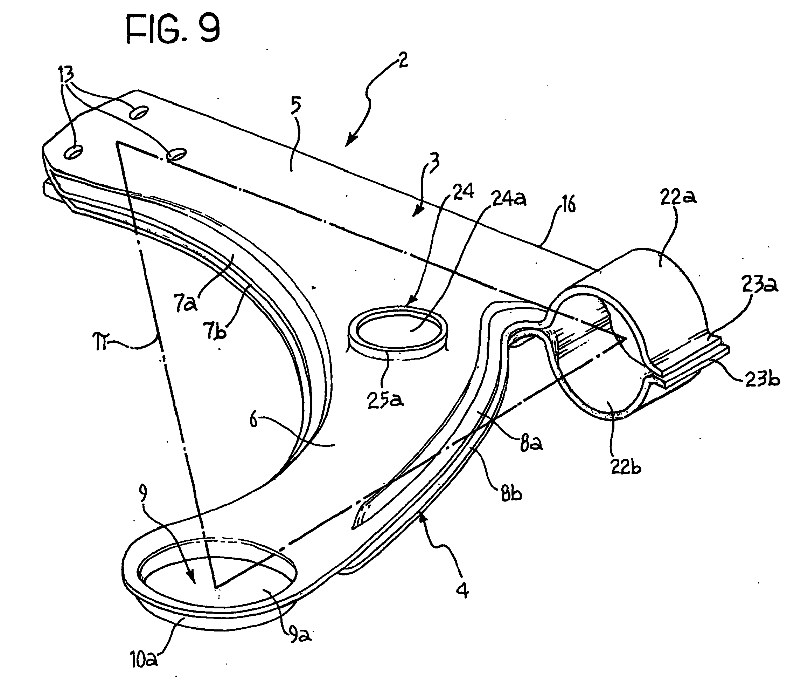

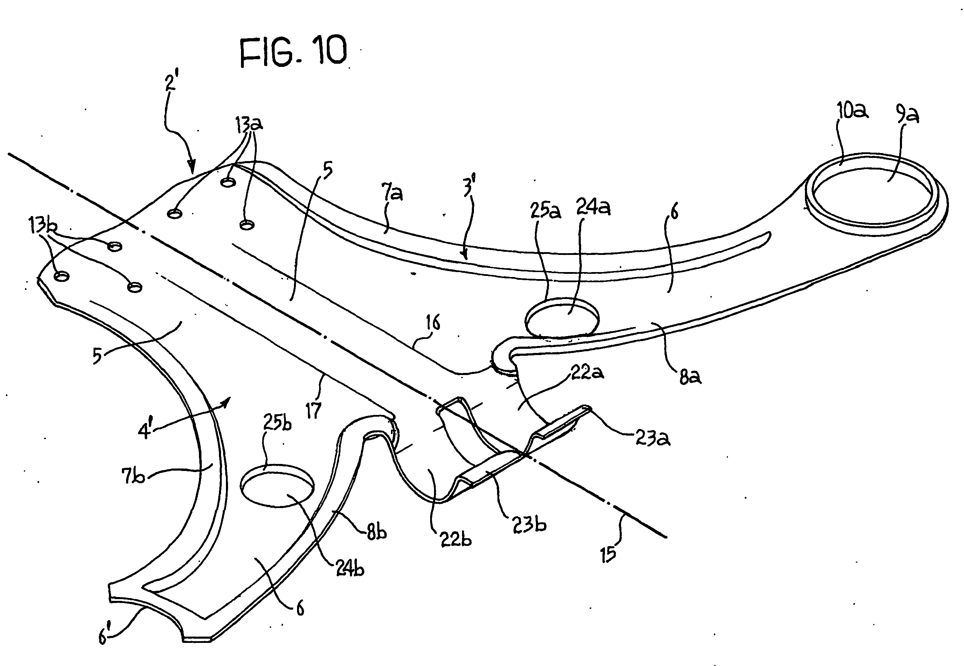

Figures 9 and 10 illustrate a further preferred embodiment of the invention, in which the same reference numerals have been assigned to parts and elements similar or identical to those illustrated in the preceding figures.

Said embodiment differs from that described previously with reference to Figures 1 to 4 in the following characteristics.

First of all, the cylindrical seat 9, capable of receiving an intermediate connection device, such as a bush 18 with vertical axis (not shown), is produced with the single circular hole 9a, provided with a circumferential edge 10a, formed in the upper portion 3 of the member 2. The semi-finished product 2' therefore no longer has a shape symmetrical with respect to the axis 15 (Figure 10), since the lateral development of the curved limb 6 of the plate portion 4' is interrupted at an edge 6', before forming an end portion corresponding to that of the other plate portion in which the hole 9b is formed.

Even if not expressly illustrated and described, it is obviously possible, without thereby departing from the scope of the invention, to produce the cylindrical seat 9 with a single hole 9b in the lower portion 4 of the structural member 2.

Said solution makes it possible to reduce the production costs further, owing to the minimisation of the scrap caused by the initial blanking operation. Another advantage lies in the fact that the production of the cylindrical seat 9 by means of a single hole 9a or 9b in one of the two portions 3 and 4 of the structural member 2, instead of by means of both the holes 9a and 9b in the two portions 3 and 4, avoids the need to define tight limits of tolerance in the mutual positioning of said holes, thus further contributing to the reduction of the costs of manufacture of the member.

Another difference between this second preferred embodiment and the first lies in the arrangement for fixing the bush 12 with horizontal axis. In this case fixing is ensured by a circumferentially closed seat 22, comprised between two semicircular appendages 22a and 22b, which extend longitudinally from the straight limbs 5 of the two portions 3 and 4 of the member 2. The appendages 22a and 22b advantageously have joining edges 23a and 23b respectively, which may have shapes and arrangements of the same type as those described with regard to the edges 7a, 7b, 8a, 8b for joining the limbs 5 and 6 of the two facing portions 3 and 4.

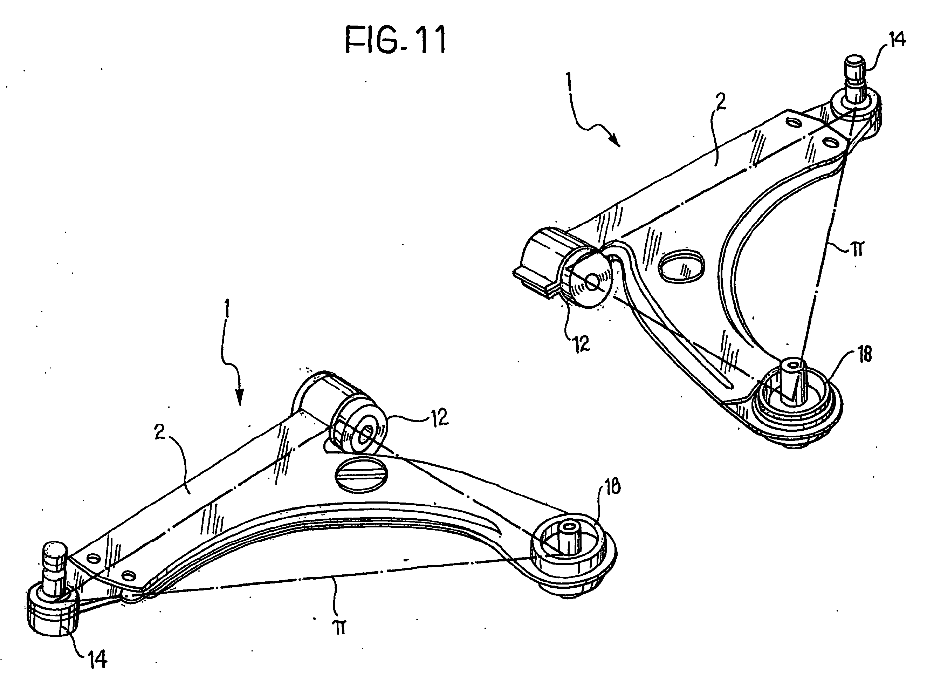

Figure 11 shows how the structural member 2 can be used according to the invention to form both the left-hand and right-hand arms of the same motor vehicle suspension, without the need to differentiate the designs and methods of production of the member intended for the left-hand arm with respect to that intended for the right-hand arm.

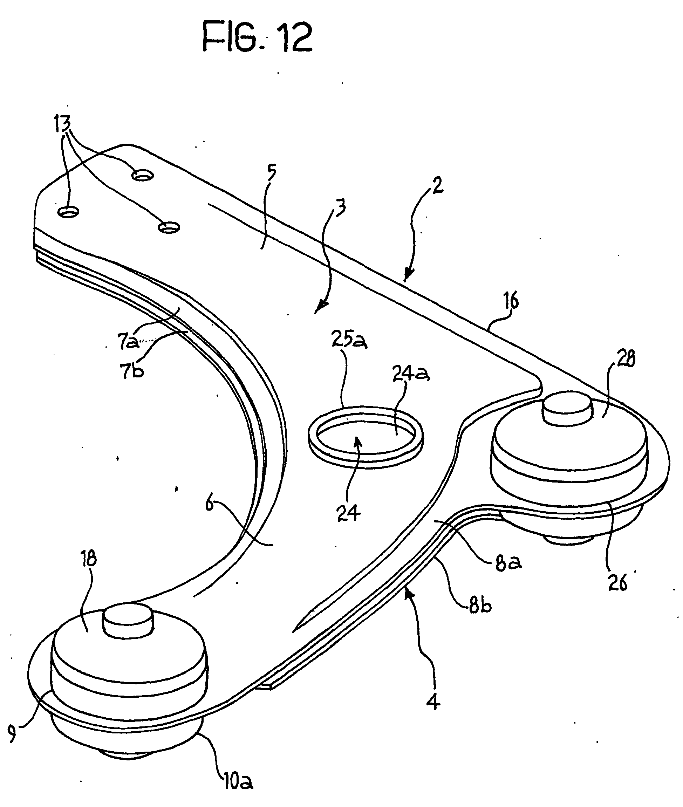

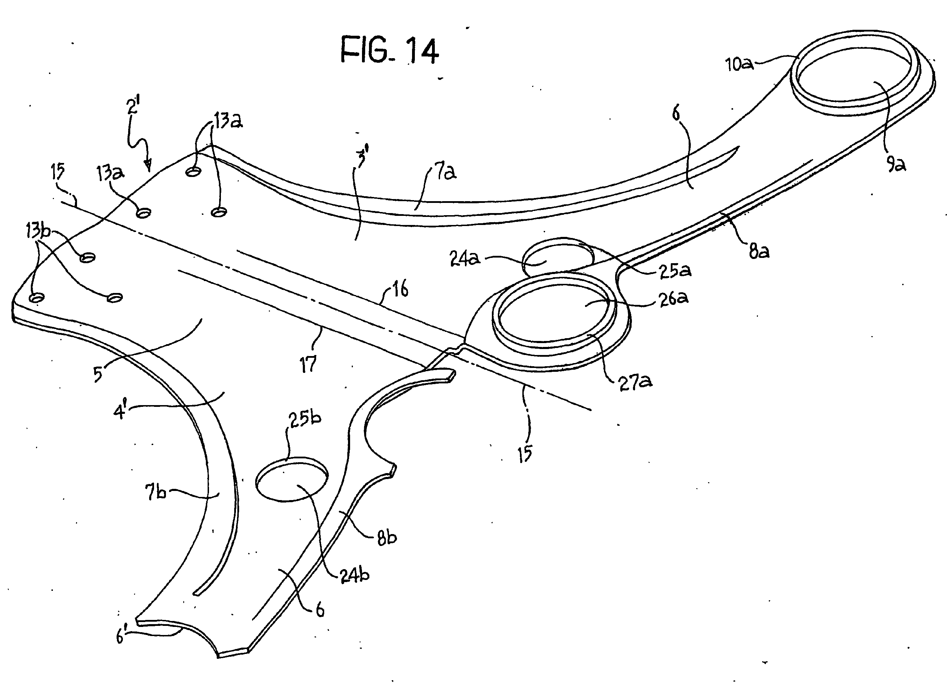

Finally, referring to Figures 12 to 14, wherein the same reference numerals have been assigned to parts and elements similar or identical to those illustrated in the preceding figures, a further alternative embodiment of the structural member 2 according to the invention can be observed. Said alternative embodiment differs from the embodiment previously illustrated with reference in particular to Figure 9, in that at the opposite end of the straight limb 5 from that in which the seats 13 for fixing the bracket member 14 (which is not shown) are provided, it has a cylindrical seat 26 with vertical axis instead of horizontal.

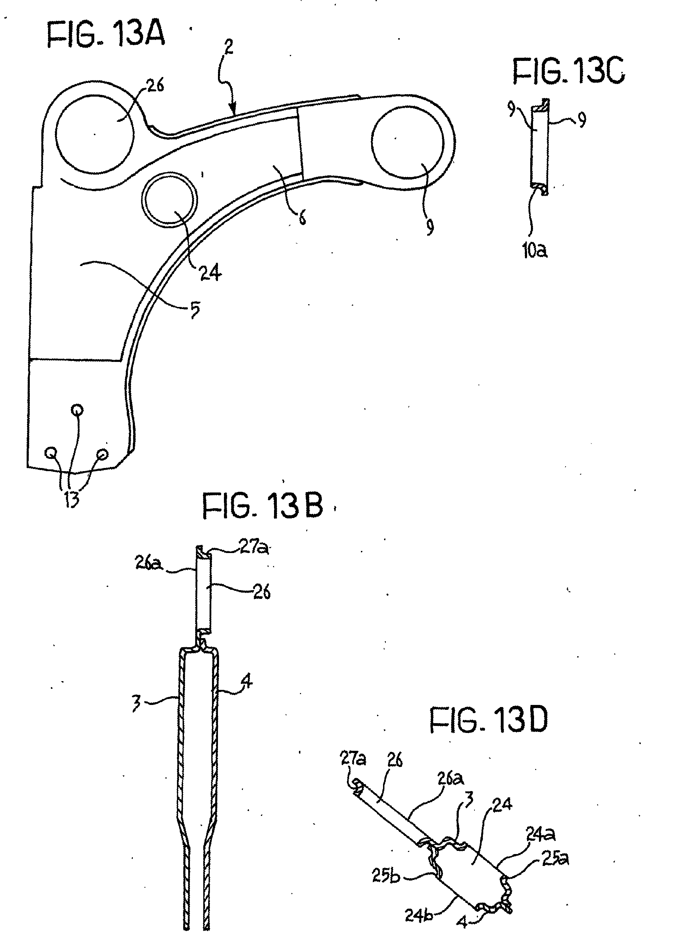

The seat 26, which is capable of receiving a connection device 28, such as a bush (Figure 12), is formed in a similar manner to the cylindrical seat 9 at the end of the curved limb 6. It in fact comprises a single circular hole 26a, advantageously provided with a circumferential edge 27a, formed in the upper portion 3 of the member 2, as can be clearly observed in particular in Figures 13B and 13D, which show two sectional views of the member 2 in two different planes passing through the axis of the seat 26.

Naturally, with the principle of the invention remaining the same, the embodiments and the details of production may be widely varied with respect to what has been described and illustrated purely by way of non-limiting example, without thereby departing from the scope of the invention as defined in the appended claims.

## Claims

1. A structural member (2) for a triangular arm (1) of a motor-vehicle suspension, comprising a first limb (5) adapted to retain at its opposite ends first and second connection means (14; 12, 28), respectively, and a second limb (6) extending laterally from the first (5) and adapted to retain at its free end third connection means (18); the member (2) including a pair of shaped portions (3, 4) disposed facing each other to form a box-like structure;
**characterised in that**
- said first limb (5) has a straight side and said second limb (6) extends laterally from the side of the first limb (5) which is opposite said straight side;
- said member (2) is formed of a single-piece element (2'; 2) of plastically deformable sheet material including an intermediate plate portion (5, 11a, 11b, 16, 17) and a pair of side plate portions (3', 4'; 3, 4) which are integral with and extend in opposite directions from said intermediate portion; and
- said single-piece element (2'; 2) is folded over along at least one predetermined line (16, 17) extending in said intermediate plate portion (5, 11a, 11b, 16, 17; 5, 22a, 22b, 16, 17), whereby in the folded condition of the element (2'; 2) the intermediate portion forms the first limb (5) having a straight side, and the side plate portions (3', 4'; 3, 4) are disposed facing each other and form the second limb (6).

2. A structural member according to Claim 1, **characterised in that** at least one hole (9a, 9b, 24a, 24b, 26a) adapted to receive one of the connection means (18, 28) is formed in the side plate portions (3', 4'; 3, 4) of the single-piece element (2'; 2).

3. A structural member according to Claim 2, **characterised in that** at least one first hole (9a, 24a, 26a) is formed in the one side plate portion (3'; 3) of the single-piece element (2'; 2) and at least one second hole (9b, 24b, 26b) is formed in the other side plate portion (4'; 4), each pair of first and second holes being positioned so as to be coaxial with each other in the folded condition of the element (2'; 2), thereby forming a cylindrical seat (9, 24) adapted to receive one of the connection means (18, 28).

4. A structural member according to Claim 2 or Claim 3, **characterised in that** at least one of the holes (9a, 9b, 24a, 24b, 26a) adapted to receive the connection means (18, 28) has a peripheral edge (10a, 10b, 25a, 25b, 27a) folded over parallel the axis of the hole so as to define a lateral surface for guiding and retaining the associated connection means (18, 28).

5. A structural member according to any one of the preceding claims, **characterised in that** a first plurality of apertures (13a) is formed in the one side plate portion (3'; 3) of the single-piece element (2'; 2) and a second plurality of apertures (13b) is formed in the other side plate portion (4' ; 4), these apertures being positioned so as to be coaxial with each other in the folded condition of the of the element (2' ; 2), thereby providing a corresponding plurality of cylindrical seats (13) for retaining one of the connection means (14).

6. A structural member according to any one of the preceding claims, **characterised in that** the intermediate plate portion (5, 11a, 11b, 16, 17; 5, 22a, 22b, 16, 17) of the single-piece element (2'; 2 ) forms at one of its ends a pair of extensions (11a, 11b; 22a, 22b) positioned and shaped in such a manner that in the folded condition of the single-piece element (2'; 2) they face each other and can clamp one of the said first and second connection means (12).

7. A structural member according to any one of the preceding claims, **characterised in that** the side plate portions (3', 4'; 3, 4) of the single-piece element (2'; 2) are provided with edges (7a, 7b, 8a, 8b) along at least part of their perimeter, these edges being arranged in such a manner that they can be joined together in the folded condition of the element (2'; 2), thereby securing the pair of shaped portions (3, 4) together.

8. A method for the production of a structural member (2) for a triangular arm (1) of a motor-vehicle suspension, which member includes a first limb (5) adapted to retain at its opposite ends first and second connection means (14; 12, 28), respectively, and a second limb (6) extending laterally from the first (5) and adapted to retain at its free end third connection means (18); the method being **characterised in that** it comprises the steps of:
a) providing a single-piece element (2'; 2) of plastically deformable sheet material including an intermediate plate portion (5, 11a, 11b, 16, 17) and a pair of side plate portions (3', 4'; 3, 4) which are integral with and extend in opposite directions from said intermediate portion;
b) folding over said single-piece element (2'; 2) along at least one predetermined line (16, 17) extending in said intermediate plate portion (5, 11a, 11b, 16, 17), so that in the folded condition of the element (2'; 2) the intermediate portion forms the first limb (5) having a straight side, and the side plate portions (3', 4'; 3, 4) are disposed facing each other and form the second limb (6) extending laterally from the side of the first limb (5) which is opposite said straight side; and
c) securing together the facing portions (3', 4'; 3, 4) of the member thus obtained.

9. A method according to Claim 8, **characterised in that** it comprises, before the step a), the step of providing in the side plate portions (3', 4'; 3, 4) of the single-piece element (2'; 2) at least one hole (9a, 9b, 24a, 24b, 26a) adapted to receive one of the said connection means (18, 28).

10. A method according to Claim 8, **characterised in that** it comprises, before the step a), the step of providing at least one first hole (9a, 24a) in the one side plate portion (3' ; 3) of the single-piece element (2'; 2) and at least one second hole (9b, 24b) in the other side plate portion (4' ; 4), said first and second holes being positioned so as to be coaxial in pairs after the step b), thereby defining at least one cylindrical seat (9, 24) adapted to receive one of the said connection means (18, 28).

11. A method according to Claim 8 or Claim 9, **characterised in that** it comprises, before the step b), the step of folding over a peripheral edge (10a, 10b, 25a, 25b, 27a) of at least one of the said holes (9a, 9b, 24a, 24b, 26a) parallel to the axis of the hole so as to provide a lateral surface for guiding and retaining the associated connection means (18, 28).

12. A method according to any one of Claims 8 to 11, **characterised in that** it comprises, before the step b), the step of providing a first plurality of apertures (13a) in the one side plate portion (3'; 3) of the single-piece element (2'; 2) and a second plurality of apertures (13b) in the other side plate portion (4'; 4), these apertures being positioned so as to be coaxial with each other in the folded condition of the element (2' ; 2) at the end of the step b), thereby providing a corresponding plurality of cylindrical seats (13) for retaining one of the said connection means (14).

13. A method according to any one of Claims 8 to 12, **characterised in that** the step a) further comprises the operations of:
- forming a pair of extensions (11a, 11b; 22a, 22b) in the intermediate plate portion (5, 11a, 11b, 16, 17; 5, 22a, 22b, 16, 17) of the single-piece element (2'; 2), these extensions being arranged so as to face each other in the folded condition of the element (2'; 2); and
- shaping the extensions (11a, 11b, 22a, 22b) in such a manner that in the folded condition of the element (2'; 2) they can clamp one of the said first and second connection means (12).

14. A method according to any one of Claims 8 to 13, **characterised in that** it comprises the step of providing, before the step b), peripheral edges (7a, 7b, 8a, 8b) along at least part of the perimeter of the side plate portions (3', 3; 4', 4) of the single-piece element (2'; 2), these edges being shaped so that they can be joined together during the step c).

## Patentansprüche

1. Strukturelement (2) für einen dreieckigen Arm (1) für die Aufhängung bei einem Kraftfahrzeug, wobei das Strukturelement (2) einen ersten Schenkel (5), der so ausgebildet ist, dass er an seinen gegenüber liegenden Enden eine erste bzw. eine zweite Verbindungseinrichtung (14; 12, 28) halten kann, sowie einen zweiten Schenkel (6) enthält, der vom ersten Schenkel (5) seitlich verläuft und so ausgebildet ist, dass er an seinem freien Ende eine dritte Verbindungseinrichtung (18) halten kann; wobei das Element (2) ein Paar von Formteilen (3, 4) aufweist, die einander gegenüber liegend angeordnet sind, um einen kastenartigen Aufbau zu bilden;
**dadurch gekennzeichnet, dass**
- der erste Schenkel (5) eine gerade Seite besitzt und der zweite Schenkel (6) von jener Seite des ersten Schenkels (5) seitlich verläuft, die der geraden Seite gegenüber liegt;
- das Element (2) von einem aus einem einzigen Teil bestehenden Element (2'; 2) aus einem plastisch verformbaren Tafelmaterial gebildet wird, das einen Zwischenplattenteil (5, 11a, 11b, 16, 17) sowie ein Paar von Seitenplattenteilen (3' , 4'; 3, 4) aufweist, die gemeinsam ausgebildet sind und vom Zwischenteil in entgegengesetzte Richtungen verlaufen; und
- das aus einem einzigen Teil bestehende Element (2'; 2) entlang von zumindest einer vorgegebenen Linie (16, 17) gefaltet wird, die im Zwischenplattenteil (5, 11a, 11b, 16, 17; 5, 22a, 22b, 16, 17) verläuft, wodurch im gefalteten Zustand des Elements (2'; 2) der Zwischenteil den ersten Schenkel (5) bildet, der eine gerade Seite besitzt, und die Seitenplattenteile (3', 4'; 3, 4) einander gegenüber liegend angeordnet sind und den zweiten Schenkel (6) bilden.

2. Strukturelement gemäß Anspruch 1, **dadurch gekennzeichnet, dass** in den Seitenplattenteilen (3', 4'; 3, 4) des aus einem einzigen Teil bestehenden Elements (2'; 2) zumindest eine Öffnung (9a, 9b, 24a, 24b, 26a) ausgebildet ist, die so ausgebildet ist, dass sie eine der Verbindungseinrichtungen (18, 28) aufnehmen kann.

3. Strukturelement gemäß Anspruch 2, **dadurch gekennzeichnet, dass** zumindest eine erste Öffnung (9a, 24a, 26a) in dem einen Seitenplattenteil (3'; 3) des aus einem einzigen Teil bestehenden Elements (2'; 2) und zumindest eine zweite Öffnung (9b, 24b, 26b) im anderen Seitenplattenteil (4'; 4) ausgebildet ist; wobei jedes Paar von ersten und zweiten Öffnungen so angeordnet ist, dass sie im gefalteten Zustand des Elements (2'; 2) koaxial zueinander liegen, wodurch ein zylindrischer Sitz (9, 24) gebildet wird, der so ausgebildet ist, dass er eine der Verbindungseinrichtungen (18, 28) aufnehmen kann.

4. Strukturelement gemäß Anspruch 2 oder Anspruch 3, **dadurch gekennzeichnet, dass** zumindest eine der Öffnungen (9a, 9b, 24a, 24b, 26a), die so ausgebildet ist, dass sie die Verbindungseinrichtung (18, 28) aufnehmen kann, eine Umfangskante (10a, 10b, 25a, 25b, 27a) besitzt, die parallel zur Achse der Öffnung so gefaltet wird, dass sie eine Seitenfläche bildet, um die zugeordnete Verbindungseinrichtung (18, 28) zu führen und zu halten.

5. Strukturelement gemäß irgendeinem der bisherigen Ansprüche, **dadurch gekennzeichnet, dass** eine erste Vielzahl von Öffnungen (13a) in dem einen Seitenplattenteil (3'; 3) des aus einem einzigen Teil bestehenden Elements (2' ; 2) und eine zweite Vielzahl von Öffnungen (13b) in dem anderen Seitenplattenteil (4'; 4) ausgebildet ist, wobei diese Öffnungen so angeordnet sind, dass sie im gefalteten Zustand des Elements (2'; 2) koaxial zueinander liegen, wodurch eine entsprechende Vielzahl von zylindrischen Sitzen (13) geliefert wird, um eine der Verbindungseinrichtungen (14) zu halten.

6. Strukturelement gemäß irgendeinem der bisherigen Ansprüche, **dadurch gekennzeichnet, dass** der Zwischenplattenteil (5, 11a, 11b, 16, 17; 5, 22a, 22b, 16, 17) des aus einem einzigen Teil bestehenden Elements (2'; 2) an einem seiner Enden ein Paar von Vorsprüngen (11a, 11b; 22a, 22b) bildet, die so angeordnet und geformt sind, dass sie im gefalteten Zustand des aus einem einzigen Teil bestehenden Elements (2'; 2) einander gegenüber liegen und eine der ersten und zweiten Verbindungseinrichtungen (12) einspannen können.

7. Strukturelement gemäß irgendeinem der bisherigen Ansprüche, **dadurch gekennzeichnet, dass** die Seitenplattenteile (3', 4'; 3, 4) des aus einem einzigen Teil bestehenden Elements (2'; 2) entlang von zumindest einem Teil ihres Umfangs mit Kanten (7a, 7b, 8a, 8b) versehen sind, wobei diese Kanten so angeordnet sind, dass sie im gefalteten Zustand des Elements (2'; 2) miteinander verbunden werden können, wodurch das Paar von Formteilen (3, 4) aneinander befestigt wird.

8. Verfahren für die Herstellung eines Strukturelements (2) für einen dreieckigen Arm (1) für den Aufbau bei einem Kraftfahrzeug, wobei das Element einen ersten Schenkel (5), der so ausgebildet ist, dass er an seinen entgegengesetzten Enden eine erste bzw. eine zweite Verbindungseinrichtung (14; 12, 28) halten kann, sowie einen zweiten Schenkel (6) aufweist, der vom ersten Schenkel (5) seitlich verläuft und so ausgebildet ist, dass er an seinem freien Ende eine dritte Verbindungseinrichtung (18) halten kann;
wobei das Verfahren **dadurch gekennzeichnet ist, dass** es folgende Schritte enthält:
a) Bereitstellen aus einem plastisch verformbaren Tafelmaterial eines aus einem einzigen Teil bestehenden Elements (2'; 2), das einen Zwischenplattenteil (5, 11a, 11b, 16, 17) sowie ein Paar von Seitenplattenteilen (3', 4'; 3, 4) aufweist, die mit dem Zwischenplattenteil gemeinsam ausgebildet sind und von diesem in entgegengesetzte Richtungen verlaufen;
b) Falten des aus einem einzigen Teil bestehenden Elements (2'; 2) entlang von zumindest einer vorgegebenen Linie (16, 17), die im Zwischenplattenteil (5, 11a, 11b, 16, 17) verläuft, so dass der Zwischenteil im gefalteten Zustand des Elements (2'; 2) den ersten Schenkel (5) bildet, der eine gerade Seite besitzt, und die Seitenplattenteile (3', 4'; 3, 4) so angeordnet sind, dass sie einander gegenüber liegen und den zweiten Schenkel (6) bilden, der von jener Seite des ersten Schenkels (5) seitlich verläuft, die der gerade Seite gegenüber liegt; und
c) aneinander Befestigen der einander gegenüber liegenden Teile (3', 4'; 3, 4) des Elements, das man auf diese Weise erhält.

9. Verfahren gemäß Anspruch 8, **dadurch gekennzeichnet, dass** das Verfahren vor dem Schritt a) einen Schritt enthält, in dem in den Seitenplattenteilen (3', 4'; 3, 4) des aus einem einzigen Teil bestehenden Elements (2'; 2) zumindest eine Öffnung (9a, 9b, 24a, 24b, 26a) vorgesehen wird, die so ausgebildet ist, dass sie eine der Verbindungseinrichtungen (18, 28) aufnehmen kann.

10. Verfahren gemäß Anspruch 8, **dadurch gekennzeichnet, dass** das Verfahren vor dem Schritt a) einen Schritt enthält, in dem zumindest eine erste Öffnung (9a, 24a) in dem einen Seitenplattenteil (3'; 3) des aus einem einzigen Teil bestehenden Elements (2'; 2) sowie zumindest eine zweite Öffnung (9b, 24b) in dem anderen Seitenplattenteil (4'; 4) ausgebildet wird, wobei die erste und die zweite Öffnung so angeordnet sind, dass sie nach dem Schritt b) paarweise koaxial zueinander liegen, wodurch zumindest ein zylindrischer Sitz (9, 24) gebildet wird, der so ausgebildet ist, dass er eine der Verbindungseinrichtungen (18, 28) aufnehmen kann.

11. Verfahren gemäß Anspruch 8 oder Anspruch 9, **dadurch gekennzeichnet, dass** das Verfahren vor dem Schritt b) einen Schritt enthält, in dem eine Umfangskante (10a, 10b, 25a, 25b, 27a) von zumindest einer der Öffnungen (9a, 9b, 24a, 24b, 26a) parallel zur Achse der Öffnung gefaltet wird, um eine Seitenfläche zu liefern, um die zugeordnete Verbindungseinrichtung (18, 28) zu führen und zu halten.

12. Verfahren gemäß irgendeinem der Ansprüche 8 bis 11, **dadurch gekennzeichnet, dass** das Verfahren vor dem Schritt b) einen Schritt enthält, in dem eine erste Vielzahl von Öffnungen (13a) in dem einem Seitenplattenteil (3'; 3) des aus einem einzigen Teil bestehenden Elements (2'; 2) sowie eine zweite Vielzahl von Öffnungen (13b) in dem anderen Seitenplattenteil (4'; 4) vorgesehen wird, wobei diese Öffnungen so angeordnet sind, dass sie am Ende des Schritts b) im gefalteten Zustand des Elements (2'; 2) koaxial zueinander liegen, wodurch eine entsprechende Vielzahl von zylindrischen Sitzen (13) geliefert wird, um eine der Verbindungseinrichtungen (14) zu halten.

13. Verfahren gemäß irgendeinem der Ansprüche 8 bis 12, **dadurch gekennzeichnet, dass** das Verfahren im Schritt a) weiters folgende Vorgänge enthält:
- Ausbilden eines Paars von Vorsprüngen (11a, 11b; 22a, 22b) im Zwischenplattenteil (5, 11a, 11b, 16, 17; 5, 22a, 22b, 16, 17) des aus einem einzigen Teil bestehenden Elements (2'; 2), wobei diese Vorsprünge so angeordnet sind, dass sie im gefalteten Zustand des Elements (2'; 2) einander gegenüber liegen; und
- Formen der Vorsprünge (11a 11b, 22a, 22b) so, dass sie im gefalteten Zustand des Elements (2'; 2) eine der ersten und zweiten Verbindungseinrichtungen (12) einspannen können.

14. Verfahren gemäß irgendeinem der Ansprüche 8 bis 13, **dadurch gekennzeichnet, dass** das Verfahren einen Schritt enthält, in dem vor dem Schritt b) Umfangskanten (7a, 7b, 8a, 8b) entlang von zumindest einem Teil des Umfangs der Seitenplattenteile (3', 3; 4', 4) des aus einem einzigen Teil bestehenden Elements (2'; 2) vorgesehen werden, wobei diese Kanten so geformt sind, dass sie während des Schritts c) miteinander verbunden werden können.

## Revendications

1. Elément structurel (2) pour un bras triangulaire (1) d'une suspension de véhicule à moteur, comprenant une première branche (5) adaptée pour retenir au niveau de ses extrémités opposées, des premier et second moyens de raccordement (14 ; 12, 28), respectivement et une seconde branche (6) s'étendant latéralement à partir de la première (5) et adaptée pour retenir au niveau de son extrémité libre des troisièmes moyens de raccordement (18) ; l'élément (2) comprenant une paire de parties formées (3, 4) disposées l'une en face de l'autre pour former une structure en forme de boîte;
**caractérisé en ce que** :
ladite première branche (5) a un côté droit et ladite seconde branche (6) s'étend latéralement à partir du côté de la première branche (5) qui est opposé audit côté droit ;
ledit élément (2) est formé avec un élément d'un seul tenant (2' ; 2) réalisé avec un matériau de feuille plastiquement déformable comprenant une partie de plaque intermédiaire (5, 11a, 11b, 16, 17) et une paire de parties de plaque latérale (3', 4' ; 3, 4) qui sont solidaires et s'étendent dans des directions opposées par rapport à ladite partie intermédiaire ; et
ledit élément d'un seul tenant (2' ; 2) est replié le long d'au moins une ligne prédéterminée (16, 17) s'étendant dans ladite partie de plaque intermédiaire (5, 11a, 11b, 16, 17 ; 5, 22a, 22b, 16, 17) dans la condition pliée de l'élément (2' ; 2), la partie intermédiaire forme la première branche (5) ayant un côté droit et les parties de plaque latérale (3', 4' ; 3, 4) sont disposées l'une en face de l'autre et forment la seconde branche (6).

2. Elément structurel selon la revendication 1, **caractérisé en ce qu'**au moins un trou (9a, 9b, 24a, 24b, 26a) adapté pour recevoir l'un des moyens de raccordement (18, 28) est formé dans les parties de plaque latérale (3', 4' ; 3, 4) de l'élément d'un seul tenant (2' ; 2).

3. Elément structurel selon la revendication 2, **caractérisé en ce qu'**au moins un premier trou (9a, 24a, 26a) est formé dans la une partie de plaque latérale (3' ; 3) de l'élément d'un seul tenant (2' ; 2) et au moins un second trou (9b, 24b, 26b) est formé dans l'autre partie de plaque latérale (4' ; 4), chaque paire des premier et second trous étant positionnés afin d'être coaxiaux l'un par rapport à l'autre dans la condition pliée de l'élément (2' ; 2), formant ainsi un siège cylindrique (9, 24) adapté pour recevoir l'un des moyens de raccordement (18, 28).

4. Elément structurel selon la revendication 2 ou la revendication 3, **caractérisé en ce qu'**au moins l'un des trous (9a, 9b, 24a, 24b, 26a) adaptés pour recevoir les moyens de raccordement (18, 28) a un bord périphérique (10a, 10b, 25a, 25b, 27a) replié parallèle à l'axe du trou afin de définir une surface latérale pour guider et retenir les moyens de raccordement (18, 28) associés.

5. Elément structurel selon l'une quelconque des revendications précédentes, **caractérisé en ce qu'**une première pluralité d'ouvertures (13a) est formée dans la une plaque latérale (3' ; 3) de l'élément d'un seul tenant (2' ; 2) et une seconde pluralité d'ouvertures (13b) est formée dans l'autre partie de plaque latérale (4' ; 4), ces ouvertures étant positionnées pour être coaxiales les unes par rapport aux autres dans la condition pliée de l'élément (2' ; 2), proposant ainsi une pluralité correspondante de sièges cylindriques (13) pour retenir l'un des moyens de raccordement (14).

6. Elément structurel selon l'une quelconque des revendications précédentes, **caractérisé en ce que** la partie de plaque intermédiaire (5, 11a, 11b, 16, 17 ; 5, 22a, 22b, 16, 17) de l'élément d'un seul tenant (2' ; 2) forme au niveau de l'une de ses extrémités une paire d'extensions (11a, 11b ; 22a, 22b) positionnées et formées de sorte que dans la condition pliée de l'élément d'un seul tenant (2' ; 2) elles se font face et peuvent serrer l'un desdits premier et second moyens de raccordement (12).

7. Elément structurel selon l'une quelconque des revendications précédentes, **caractérisé en ce que** les parties de plaque latérale (3', 4' ; 3, 4) de l'élément d'un seul tenant (2' ; 2) sont prévues avec des bords (7a, 7b, 8a, 8b) le long d'au moins une partie de leur périmètre, ces bords étant agencés de sorte qu'ils peuvent être assemblés dans la condition pliée de l'élément (2' ; 2), fixant ainsi la paire de parties formées (3, 4) ensemble.

8. Procédé pour la production d'un élément structurel (2) pour un bras triangulaire (1) d'une suspension de véhicule à moteur, lequel élément comprend une première branche (5) adaptée pour retenir au niveau de ses extrémités opposées, des premier et second moyens de raccordement (14; 12, 28) respectivement, et une seconde branche (6) s'étendant latéralement à partir de la première (5) et adaptée pour retenir au niveau de son extrémité libre, des troisièmes moyens de raccordement (18) ;
le procédé étant **caractérisé en ce qu'**il comprend les étapes consistant à :
a) prévoir un élément d'un seul tenant (2' ; 2) réalisé avec un matériau de feuille plastiquement déformable comprenant une partie de plaque intermédiaire (5 ; 11a, 11b, 16, 17) et une paire de parties de plaque latérale (3', 4' ; 3, 4) qui sont solidaires et s'étendent dans des directions opposées à partir de ladite partie intermédiaire;
b) replier ledit élément d'un seul tenant (2' ; 2) le long d'au moins une ligne prédéterminée (16, 17) s'étendant dans ladite partie de plaque intermédiaire (5, 11a, 11b, 16, 17) de sorte que dans la condition pliée de l'élément (2' ; 2) la partie intermédiaire forme la première branche (5) ayant un côté droit, et les parties de plaque latérale (3', 4' ; 3, 4) sont disposées en se faisant face et forment la seconde branche (6) s'étendant latéralement à partir du côté de la première branche (5) qui est opposé audit côté droit ; et
c) fixer ensemble les parties se faisant face (3', 4' ; 3, 4) de l'élément ainsi obtenu.

9. Procédé selon la revendication 8, **caractérisé en ce qu'**il comprend avant l'étape a), l'étape consistant à prévoir dans les parties de plaque latérale (3', 4' ; 3, 4) de l'élément d'un seul tenant (2' ; 2) au moins un trou (9a, 9b, 24a, 24b, 26a) adapté pour recevoir l'un desdits moyens de raccordement (18, 28).

10. Procédé selon la revendication 8, **caractérisé en ce qu'**il comprend, avant l'étape a), l'étape consistant à prévoir au moins un premier trou (9a, 24a) dans la une partie de plaque latérale (3' ; 3) de l'élément d'un seul tenant (2' ; 2) et au moins un second trou (9b, 24b) dans l'autre partie de plaque latérale (4' ; 4), lesdits premier et second trous étant positionnés afin d'être coaxiaux en paires après l'étape b), définissant ainsi au moins un siège cylindrique (9, 24) adapté pour recevoir l'un desdits moyens de raccordement (18, 28).

11. Procédé selon la revendication 8 ou la revendication 9, **caractérisé en ce qu'**il comprend, avant l'étape b), l'étape consistant à replier un bord périphérique (10a, 10b, 25a, 25b, 27a) d'au moins l'un desdits trous (9a, 9b, 24a, 24b, 26a) parallèle à l'axe du trou afin de fournir une surface latérale pour guider et retenir les moyens de raccordement associés (18, 28).

12. Procédé selon l'une quelconque des revendications 8 à 11, **caractérisé en ce qu'**il comprend, avant l'étape b), l'étape consistant à prévoir une première pluralité d'ouvertures (13a) dans la une partie de plaque latérale (3' ; 3) de l'élément d'un seul tenant (2' ; 2) et une seconde pluralité d'ouvertures (13b) dans l'autre partie de plaque latérale (4'; 4), ces ouvertures étant positionnées afin d'être coaxiales les unes par rapport aux autres dans la condition pliée de l'élément (2' ; 2) à la fin de l'étape b), fournissant ainsi une pluralité correspondante de sièges cylindriques (13) pour retenir l'un desdits moyens de raccordement (14).

13. Procédé selon l'une quelconque des revendications 8 à 12, **caractérisé en ce que** l'étape a) comprend en outre les opérations consistant à :
former une paire d'extensions (11a, 11b ; 22a, 22b) dans la partie de plaque intermédiaire (5, 11a, 11b, 16, 17 ; 5, 22a, 22b, 16, 17) de l'élément d'un seul tenant (2' ; 2), ces extensions étant agencées afin de se faire face dans la condition pliée de l'élément (2' ; 2) ; et
former les extensions (11a, 11b, 22a, 22b) de sorte que dans la condition pliée de l'élément (2' ; 2) elles peuvent serrer l'un desdits premier et second moyens de raccordement (12).

14. Procédé selon l'une quelconque des revendications 8 à 13, **caractérisé en ce qu'**il comprend l'étape consistant à prévoir, avant l'étape b), des bords périphériques (7a, 7b, 8a, 8b) le long d'au moins une partie du périmètre des parties de plaque latérale (3', 3 ; 4' , 4) de l'élément d'un seul tenant (2' ; 2), ces bords étant formés de sorte qu'ils peuvent être assemblés ensemble pendant l'étape c).
